# EUROPÄISCHE PATENTANMELDUNG

(11) **EP 3 082 218 A1**
(43) Veröffentlichungstag der Anmeldung: **19.10.2016**
(21) Anmeldenummer: 15163661.0
(22) Anmeldetag: 15.04.2015
(51) Int. Cl.: H02J 9/06, B60L 11/18, H01R 107/00

(54) **KOMPAKTE EINSPEISEUMSCHALTUNG ZWISCHEN ENERGIEVERSORGER UND EINEM NOTSTROMGENERATOR FÜR EINE ELEKTRO-HAUSVERTEILUNG**

(71) Anmelder: Notstromtechnik-Clasen GmbH, 22926 Ahrensburg (DE)
(72) Erfinder: DITTRICH, Jens, 61273 Wehrheim (DE); CLASEN, Klaus, 22955 Hoisdorf (DE); PED, Torsten, 18546 Sassnitz (DE)
(74) Vertreter: Glawe, Delfs, Moll

(57) **Zusammenfassung**

Beim Ausfall der Stromversorgung sind alle elektrischen Verbraucher ohne Energie. Die Bereitstellung eines separaten Notstromgenerators (13') ändert an dieser Situation nichts. Denn es können von einem Generator (13') nur elektrische Verbraucher (3') betrieben werden, die direkt mit diesem verbunden sind. Um einen Notstromgenerator (13') effektiv einsetzten zu können, muss die Elektro-Hausverteilung (4') für den Anschluss eines Generators (13') vorbereitet sein. Die Einspeiseumschaltung bildet dabei nicht nur den Anschluss für einen Notstromgenerator (13') im Falle eines Stromausfalls ab. Sondern stellt im Normalbetrieb über eine CEE-Steckdose (15') eine Stromversorgung für herkömmliche Drehstromgeräte dar. Insbesondere ist diese Einspeiseumschaltung jedoch auch dafür konzipiert, über die vorgenannte CEE-Steckdose (15') Elektro- oder Hybrid-Kraftfahrzeuge (12') mit Spannung zum Aufladen der Batterien zu versorgen. Die Einspeiseumschaltung eignet sich besonders zur Installation in Klein- und Einfamilienhäusern (1') und bietet eine einfache und sichere Umschaltung der Stromversorgung zwischen dem Energieversorger und einem Notstromgenerator (13'). Darüber hinaus kann die Installation im Regelbetrieb (Versorgung durch den Energieversorger) als Außensteckdose zum Aufladen der Batterien von Elektro- oder Hybrid-Kraftfahrzeugen (12') genutzt werden.

## Beschreibung

Beim Ausfall der Stromversorgung durch das Energieversorgungsunternehmen (EVU) für ein Einfamilienhaus oder Wohneinheiten in einem Gebäude sind alle elektrischen Verbraucher ohne Energie. Das heißt Beleuchtung, TV- und Rundfunkgeräte, Elektroherde aber auch das Heizungssystem. Insbesondere der Ausfall des Heizungssystems in der kalten Jahreszeit und über mehrere Stunden oder Tage kann zu erheblichen Einschränkungen im täglichen Leben im Haus führen. Selbst die Bereitstellung eines separaten Notstromgenerators ändert an dieser Situation nichts. Denn es können von diesem Generator nur elektrische Verbraucher betrieben werden, die direkt über einen 230V- bzw. 400V-Anschluss mit dem Notstromgenerator verbunden sind. Alle elektrischen Verbraucher im Haus die über die zentrale Elektro-Hausverteilung angeschlossen sind, können auch weiterhin nicht versorgt werden. Hier handelt es sich in der Regel um Elektroherde, das Beleuchtungssystem, Kommunikationseinrichtungen, sowie die Kühl- oder Heizungsanlage.

Aufgabe der Erfindung: Um einen Notstromgenerator (mobil oder stationär) bei einem Stromausfall effektiv einsetzen zu können, muss die Elektro-Hausverteilung für den Anschluss dieses Generators vorbereitet sein.

Die Aufgabe wird durch eine Einspeiseumschaltung mit den Merkmalen des Patentanspruchs 1 gelöst. Vorteilhafte Ausgestaltungen sind Gegenstand der Unteransprüche.

Das vorgestellte System ist im Wesentlichen in zwei Teilen aufgebaut. Zum einen eine Inneneinheit die in oder an einer herkömmlichen Elektro-Hausverteilung nach dem Zähler des Energieversorgungsunternehmens installiert wird. Zum anderen eine Außeneinheit, die wahlweise als Aufputz-Gehäuse zu Wandmontage oder als Standsäule, ausgeführt ist. Beide Anlagenteile sind mit einer 7-poligen Leitung in der notwendigen Auslegung und Dimensionierung miteinander verbunden.

Die Lösung bildet dabei nicht nur den Anschluss für einen Notstromgenerator im Falle eines Stromausfalls durch den EVU ab. Sondern stellt im Normalbetrieb über eine CEE-Steckdose in der Außeneinheit eine Stromversorgung für herkömmliche Drehstromgeräte (z.B. Betonmischer, Kreissäge, Holzspalter, usw.) dar. Insbesondere ist diese Lösung jedoch auch dafür konzipiert, über die vorgenannte CEE-Steckdose Elektro- oder Hybrid-Kraftfahrzeuge mit Spannung zum Aufladen der Batterien zu versorgen. Diese Nutzung stellt den Regelfall dar. Um bei einer frei zugänglichen Außenaufstellung sicher zu stellen, dass die CEE-Steckdose nur bei Bedarf und nicht unbefugt genutzt wird, kann diese Steckdose durch eine entsprechende Schalterstellung an der Inneneinheit spannungsfrei geschalten werden.

Im Falle eines Ausfalls der Stromversorgung kann durch eine einfache und sichere Umschaltung das Hausnetz vom Netz des EVUs getrennt werden. Danach wird durch die notwendige Schalterstellung, ebenfalls durchgeführt an der Inneneinheit, der Zugang für den Notstromgenerator frei geschaltet.

Über einen 5-poligen Kragenstecker kann nun der Notstromgenerator angeschlossen werden.

Die elektrischen Verbraucher im Haus können weiterhin betrieben werden. Siehe dazu auch die Zeichnungen in der Anlage (Detail 1, 2, 3 und 4).

Die vorgestellte Lösung eignet sich besonders zur Installation in Klein- und Einfamilienhäusern und bietet eine einfache und sichere Umschaltung der Stromversorgung zwischen EVU und einem privaten Notstromgenerator. Darüber hinaus kann die Installation im Regelbetrieb (Versorgung durch den zentralen EVU) als Außensteckdose zum Aufladen der Batterien von Elektro- oder Hybrid-Kraftfahrzeugen genutzt werden.

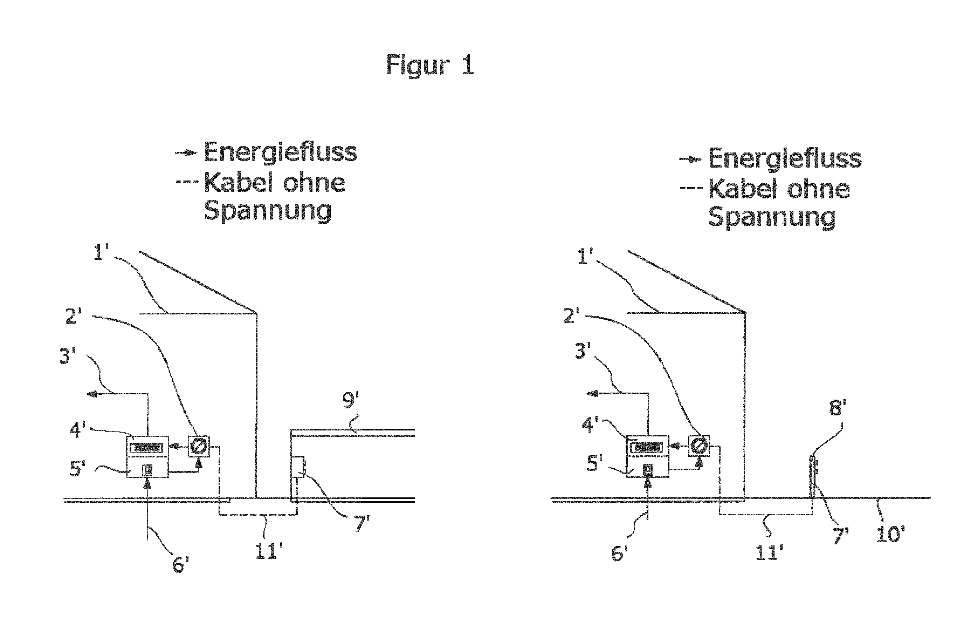

Die Erfindung wird mittels der beigefügten Zeichnung erläutert, die ein vorteilhaftes Ausführungsbeispiel darstellt. Es zeigen
- Fig. 1:: KFZ-Stellplatz/Garage (Schalterstellung "Netz");

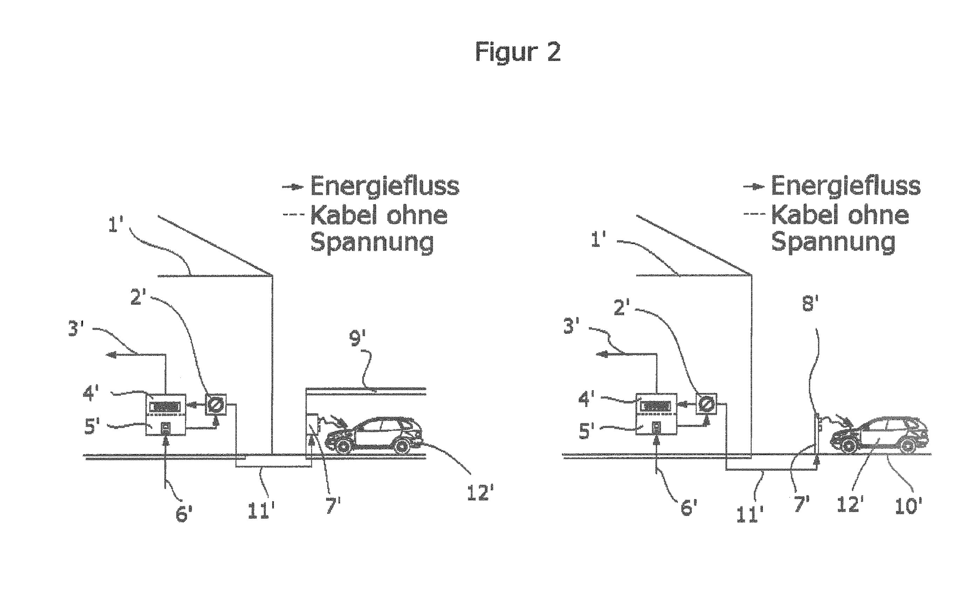

- Fig. 2:: KFZ-Stellplatz/Garage (Schalterstellung "Außensteckdose");

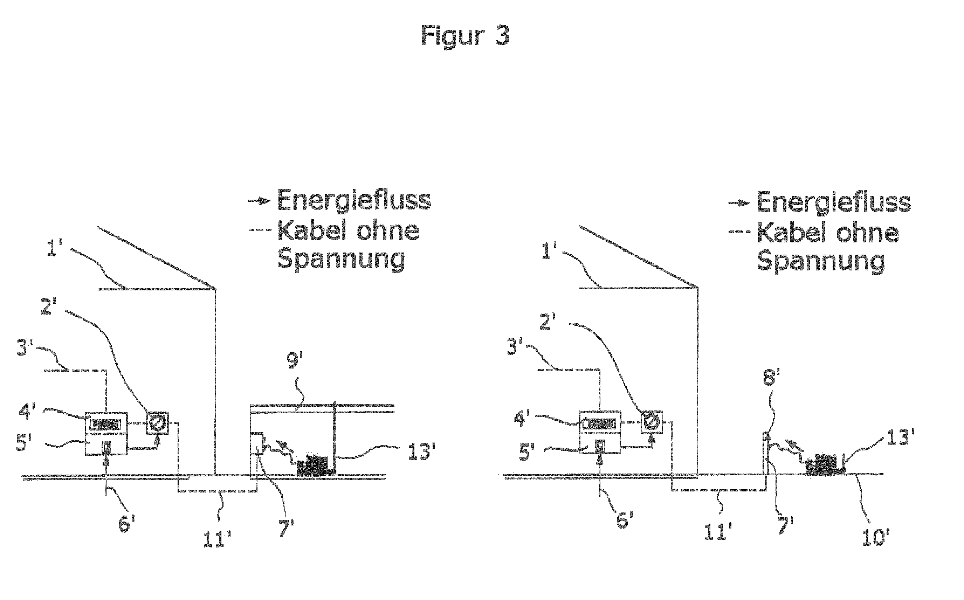

- Fig. 3:: KFZ-Stellplatz/Garage (Schalterstellung "Netz- und Generatortrennung"), Generator läuft und Einspeisung von EVU vorhanden;

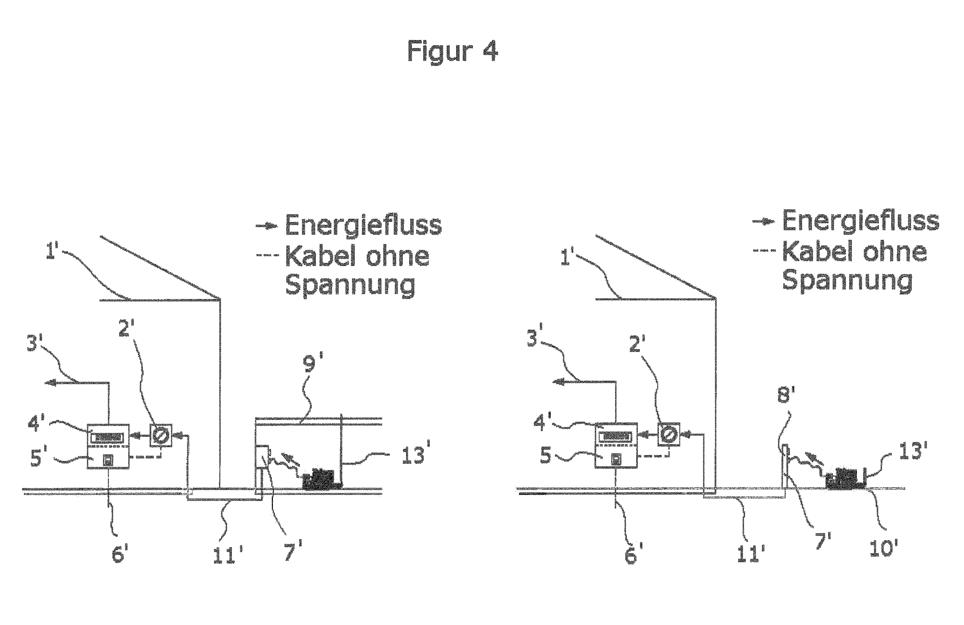

- Fig. 4:: KFZ-Stellplatz/Garage (Schalterstellung "Generator"), Betrieb über Notstromaggregat;
- Fig. 5:: Normalbetrieb (Automaten und FI offen dargestellt) ;
- Fig. 6:: Schalterstellung "Netz" / Normalbetrieb (Automaten und FI sind immer eingeschaltet);
- Fig. 7:: Schalterstellung "Außensteckdose" / Normalbetrieb mit Außensteckdose;
- Fig. 8:: Schalterstellung "Netz- und Generatortrennung" / Zwischenstellung (Netz und Generatortrennung); und
- Fig. 9:: Schalterstellung "Generator" / Betrieb über Notstromaggregat.

Die kompakte Einspeiseumschaltung ist so konzipiert, dass sie zum einen die Ein-speisung der Verbraucher in einem Haus durch einen Energieversorger (EVU) und zum anderen durch ein Notstromaggregat ermöglicht. Das komplette System besteht dabei aus einer Umschalteinrichtung (Inneneinheit) und einer Anschlusseinheit (Außeneinheit) und ist für einen Nennstrom von bis zu 63 A (nur Inneneinheit) ausgelegt. Die Umschalteinrichtung wird innerhalb der Kundenanlage zwischen dem Zähler und der Verteilung montiert. Zur Anschaltung eines Notstromaggregates oder zur alternativen Nutzung der Steckdose ist die vorgenannte Anschlusseinheit (Außeneinheit) erforderlich. Diese Außeneinheit ist mit einem 5-poligen CEE 16 A Kragenstecker sowie mit einer 5-poligen CEE 16 A Steckdose ausgestattet. Die Anschlusseinheit kann außerhalb des Gebäudes (Schutzklasse IP 44) montiert werden. Dabei ist eine Ausführung als Aufputz-Gehäuse (z.B. in einer Garage) oder als Standsäule (z.B. an einem KFZ-Stellplatz) möglich. In beiden Fällen werden die Umschalteinrichtung und die Anschlusseinheit über eine 7-polige Leitung miteinander verbunden.

### Umschalteinrichtung (Inneneinheit):

Die Umschalteinrichtung im Gebäude ist mit einem
- 3-poligen Leitungsschutzschalter (F1),
- einem 4-poligen Fehlerstromschutzschalter (FI1),
- einem 1- poligen Leitungsschutzschalter (F2),
- einem akustischen Signalgeber (H1), sowie
- einem Paketnockenschalter (S1) mit 4 Schalterstellungen versehen.

Die vier Schalterstellungen des Paketnockenschalters (S1) der Umschalteinrichtung bestimmen den Betriebszustand der kompakten Einspeiseumschaltung. Dabei stehen folgende Schalterstellungen zur Verfügung:
1. Schalterstellung "Netz"
2. Schalterstellung "Außensteckdose"
3. Schalterstellung "Netz und Generatortrennung" sowie
4. Schalterstellung "Generator"

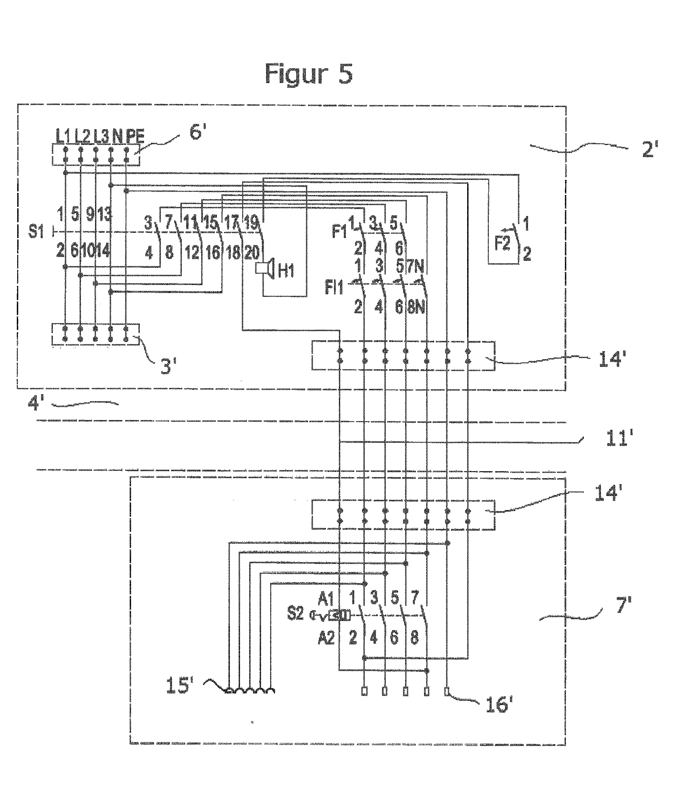

Siehe dazu Zeichnung Figur 05: Allgemeine Darstellung /Prinzipschaltbild der kompakten Umschalteinrichtung (Automaten und Fehlerstromschutzschalter offen dargestellt).

### Schalterstellung "Netz"

In Schaltstellung "Netz" werden die Verbraucher durch den Energieversorger versorgt. Die zur Anschlusseinheit führende Leitung sowie die Anschlusseinheit selbst sind spannungslos. Diese Schalterstellung dient als Sicherheitsmaßnahme, um bei einer frei zugänglichen Außenaufstellung sicher zu stellen, dass die CEE-Steckdose nur bei Bedarf und nicht unbefugt genutzt wird.

Alle Automaten und Fehlerstromschutzschalter sind dabei eingeschaltet.

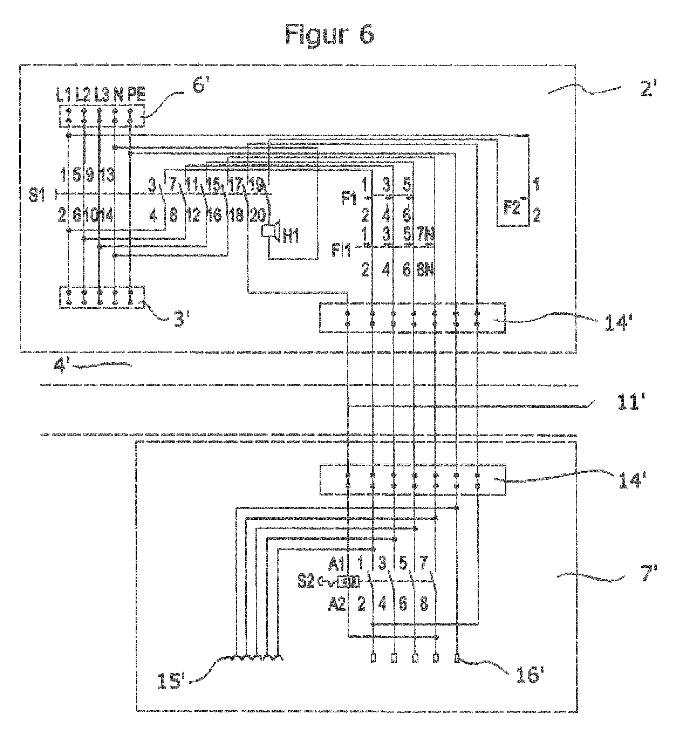

### Siehe dazu Zeichnung Figur 06: Schalterstellung Netz / Normalbetrieb (Automaten und FI sind immer eingeschaltet)

### Schalterstellung "Außensteckdose"

In der Schaltstellung "Außensteckdose" wird die Spannung bis zur Außeneinheit geschaltet. Die in der Anschlusseinheit enthaltene Anbausteckdose mit Schutzkappe 16 A wird direkt mit der Netzspannung versorgt. Der Leitungsschutzschalter (F1) erfüllt gemäß DIN VDE 0100 Teil 430 den Schutz gegen Überlast und Kurzschluss.
Der Fehlerstromschutzschalter (FI1) gewährleistet gemäß DIN VDE 0100 Teil 410 die Abschaltung für den Personenschutz.

Eine Zuschaltung des Not-Aus-Hauptschalters (S2) in der Außeneinheit (S2) und die damit verbundene Rückspeisung auf den Kragenstecker werden durch den Verriegelungskontakt und die fehlende Spannung für den Unterspannungsauslöser gewährleistet.

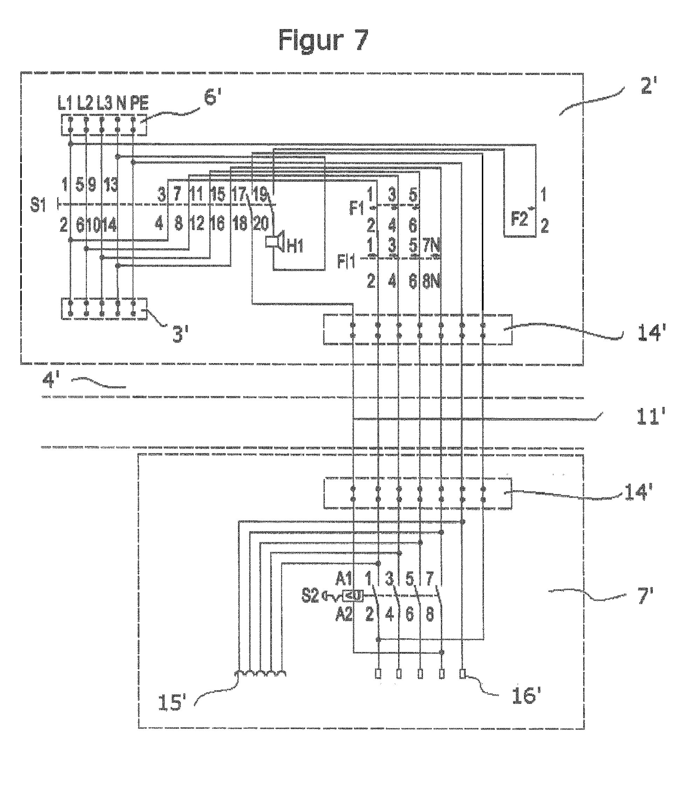

### Siehe dazu Zeichnung Figur 07: Schalterstellung Außensteckdose / Normalbetrieb mit Außensteckdose

### Schalterstellung "Netz und Generatortrennung"

In der Schalterstellung "Netz und Generatortrennung" sind die Verbraucher im Gebäude vom speisenden Netz des Energie-versorgers getrennt. Durch einen Verriegelungskontakt im Paketnockenschalter (S1) und der Verknüpfung mit dem Haupt-Not-Ausschalter (S2) in der Außeneinheit wird bei einspeisendem Notstromaggregat eine sichere Trennung von den Verbrauchern sowie vom Netz des Energieversorgers gewährleistet.

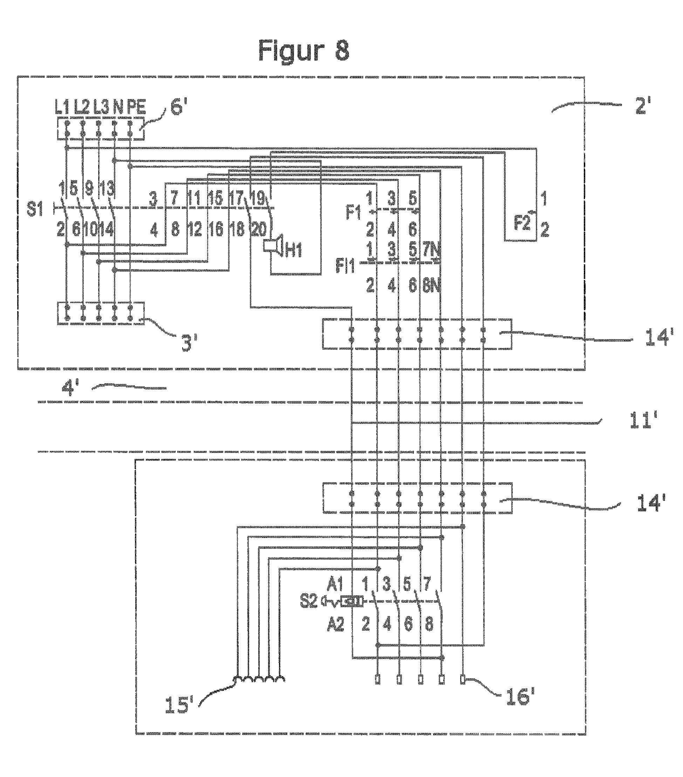

### Siehe dazu Zeichnung Figur 08: Schalterstellung Netz und Generatortrennung /Zwischenstellung (Netz- und Generatortrennung)

### Schalterstellung "Generator"

In der Schalterstellung "Generator" werden im Paketnockenschalter (S1) zwei Steuerkontakte geschlossen. Ein Steuerkontakt (17/18) schaltet die vom Notstromaggregat erzeugte Spannung auf den Unterspannungsauslöser des Haupt-Not-Ausschalters (S2) in der Außeneinheit. Erst in dieser Stellung und bei gleichzeitigem Betrieb des Notstromaggregates kann der Haupt-Not-Ausschalter (S2) geschlossen werden. Nach Betätigung des Schalters werden die Verbraucher über das Notstromaggregat versorgt.

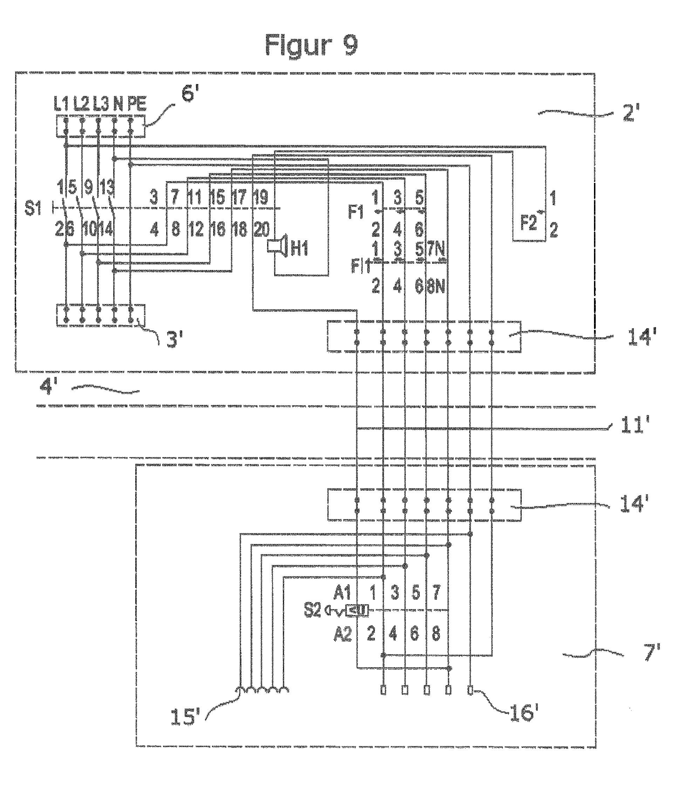

### Siehe dazu Zeichnung Figur 09: Schalterstellung Generator / Betrieb über Notstromaggregat

Der Generator darf dabei eine Leistung von bis zu 11 kVA haben. Die maximal abnehmbare Leistung wird durch den Leitungsschutzschalter F1 abgesichert. Der CEE 16 A Kragenstecker der Außeneinheit und die 16 A Kupplung der Verlängerung zum Generator begrenzen ebenfalls die maximal zu übertragende Leistung.

Bei Ausfall des Aggregates (Notstromgenerators) und der damit verbundenen Auslösung des Haupt-Not-Ausschalters (S2) erfolgt als Sicherheitsmaßnahme eine sofortige elektrische Trennung der Verbraucher vom Notstromaggregat.

Über den zweiten Steuerkontakt (19/20) wird bei laufendem Notstromaggregat über den akustischen Signalgeber H1 signalisiert, wenn die Netzversorgung des Energie-versorgers wieder vorhanden ist. Die sichere Trennung in der Hausverteilung vom Netz des Energieversorgers bleibt auch in diesem Fall weiter gewährleistet.

Nach Netzwiederkehr wird der Paketnockenschalter (S1) von Stellung "Generator" in Stellung "Netz und Generatortrennung" geschaltet. Durch diesen Zwischenschritt wird sichergestellt, dass zu keinem Zeitpunkt die Spannung vom EVU und vom Generator gleichzeitig zu den Verbrauchern geschaltet wird. Denn es erfolgt eine sofortige und sichere Trennung des Notstromaggregates von den Verbrauchern.

### Siehe dazu Zeichnung Figur 08: Schalterstellung Netz und Generatortrennung /Zwischenstellung (Netz- und Generatortrennung)

Nach dem Schalten auf "Netz" bzw. "Außensteckdose" wird die Versorgung der Verbraucher über das Netz des Energieversorgers wieder hergestellt.

### Siehe dazu Zeichnung Figur 06: Schalterstellung Netz / Normalbetrieb (Automaten und FI sind immer eingeschaltet)

### Siehe dazu Zeichnung Figur 07: Schalterstellung Außensteckdose / Normalbetrieb mit Außensteckdose

### Anschlusseinheit (Außeneinheit)

Die Anschlusseinheit (als Aufputz-Gehäuse oder Standsäule) außerhalb des Gebäudes ist mit einem
- Not-Aus-Hauptschalter mit Unterspannungsauslöser (S2),
- einem 5-poligen CEE 16 A Kragenstecker sowie
- einer 5-poligen CEE 16 A Steckdose ausgestattet.

Die durch die Schalterstellungen des Paketnockenschalters (S1) der Umschalteinrichtung vorgegebenen Betriebszustände bestimmt die Art der Nutzung der Außeneinheit.

### Schalterstellung "Netz"

In Schaltstellung "Netz" ist die zur Anschlusseinheit führende Leitung spannungslos. Die Außeneinheit hat ebenfalls keine Spannung und damit keine Funktion.

### Siehe dazu Zeichnung Figur 06: Schalterstellung Netz / Normalbetrieb (Automaten und FI sind immer eingeschaltet)

### Schalterstellung "Außensteckdose"

In der Schaltstellung "Außensteckdose" wird die Spannung bis zur Außeneinheit geschaltet. Die in der Anschlusseinheit enthaltene Anbausteckdose mit Schutzkappe 16A wird direkt mit der Netzspannung versorgt.

Eine Zuschaltung des Not-Aus-Hauptschalters (S2) in der Außeneinheit und die damit verbundene Rückspeisung auf den 5-poligen CEE 16 A Kragenstecker wird durch den Verriegelungskontakt und die fehlende Spannung für den Unterspannungsauslöser gewährleistet.

### Siehe dazu Zeichnung Figur 07: Schalterstellung Außensteckdose / Normalbetrieb mit Außensteckdose

### Schalterstellung "Netz und Generatortrennung"

In der Schalterstellung "Netz und Generatortrennung" ist die zur Anschlusseinheit führende Leitung spannungslos. Die Außeneinheit hat keine Funktion.

### Siehe dazu Zeichnung Figur 08: Schalterstellung Netz und Generatortrennung /Zwischenstellung (Netz- und Generatortrennung)

### Schalterstellung "Generator"

In der Stellung "Generator" werden im Paketnockenschalter (S1) der Umschalteinrichtung zwei Steuerkontakte geschlossen. Ein Steuerkontakt (17/18) schaltet die vom Notstromaggregat erzeugte Spannung auf den Unterspannungsauslöser des Haupt-Not-Ausschalters (S2) in der Außeneinheit. Erst in dieser Stellung und bei Betrieb des Notstromaggregates kann der Haupt-Not-Ausschalter (S2) geschlossen werden. Nach Betätigung des Schalters werden die Verbraucher über einen 5-poligen CEE 16 A Kragenstecker, an dem das Notstromaggregat angeschlossen ist, versorgt.

### Siehe dazu Zeichnung Figur 09: Schalterstellung Generator / Betrieb über Notstromaggregat

Kabel zwischen Umschalteinrichtung (Inneneinheit) und Anschlusseinheit (Außeneinheit):

Die Umschalteinrichtung und die Anschlusseinheit werden über eine 7-polige Leitung miteinander verbunden. Der erforderliche Querschnitt muss dabei den Verlegebedingungen und den gültigen DIN VDE-Anforderungen entsprechen.

### Liste der Bezugszeichen

Haus 1'
Umschalteinrichtung (Inneneinheit) 2'
Verbraucher 3'
Hausverteilung 4'
Zähler 5'
Kabel von Energieversorger 6'
Anschluss (Außeneinheit) 7'
Energiesäule 8'
Garage 9'
KFZ-Stellplatz 10'
Kabelverbindung zwischen Innen- und Außeneinheit (7'2,5qmm) 11'
Elektro- oder Hybridfahrzeug 12'
Notstromgenerator 13'
Klemmleiste 14'
Anbausteckdose mit Schutzkappe 16A 15'
Anbaugerätestecker mit Schutzkappe 16A 16'

## Patentansprüche

1. Einspeiseumschaltung zur Umschaltung zwischen einem Energieversorger (6') und einem Notstromgenerator (13') für eine Elektro-Hausverteilung (4'), wobei die Einspeiseumschaltung ein Leitungselement (11'), das zur elektrischen Verbindung mit einem Notstromgenerator (13') ausgebildet ist, eine mit dem Leitungselement (11') elektrisch verbundene Umschalteinrichtung (2'), die einen Energieversorgernetzanschluss aufweist, und eine Anschlusseinheit (7') umfasst,
**dadurch gekennzeichnet, dass**
die Anschlusseinheit (7') eine mit dem Leitungselement (11') elektrisch verbundene Steckdose (15'), einen Stecker (16'), der zur elektrischen Verbindung eines Notstromgenerators (13') mit dem Leitungselement (11') ausgebildet ist, und einen Not-Aus-Hauptschalter (S2) mit einem Unterspannungsauslöser zur elektrischen Verbindung und Trennung des Steckers (16') von dem Leitungselement (11') aufweist, wobei der Unterspannungsauslöser zur Auslösung bei einer Unterspannung am Stecker (16') ausgebildet ist; und
die Umschalteinrichtung (2') zur elektrischen Trennung und Verbindung des Unterspannungsauslösers von dem Stecker (16'), zur elektrischen Trennung und Verbindung des Leitungselements (11') von dem Energieversorgernetzanschluss, und zur elektrischen Verbindung und Trennung des Steckers (16') von dem Leitungselement (11') ausgebildet ist.

2. Einspeiseumschaltung nach Anspruch 1,
**dadurch gekennzeichnet, dass**
die Umschalteinrichtung (2') einen Paketnockenschalter (S1) mit mindestens vier Schalterstellungen aufweist, wobei
in einer ersten Schalterstellung ein Elektro-Hausverteilungsanschluss der Umschalteinrichtung (2') mit dem Energieversorgernetzanschluss verbunden ist und von dem Leitungselement (11') getrennt ist;
in einer zweiten Schalterstellung das Leitungselement (11') und der Elektro-Hausverteilungsanschluss mit dem Energieversorgernetzanschluss verbunden sind und von den Stecker (16') getrennt sind;
in einer dritten Schalterstellung der Elektro-Hausverteilungsanschluss von dem Energieversorgernetzanschluss getrennt ist und das Leitungselement (11') von dem Stecker (16') getrennt ist; und
in einer vierten Schalterstellung das Leitungselement (11') mit dem Elektro-Hausverteilungsanschluss verbunden ist und von dem Energieversorgernetzanschluss getrennt ist und der Unterspannungsauslöser mit dem Stecker (16') verbunden ist.

3. Einspeiseumschaltung nach Anspruch 2,
**dadurch gekennzeichnet, dass**
die Umschalteinrichtung (2') einen akustischen Signalgeber (H1) aufweist, der in der vierten Schalterstellung mit dem Energieversorgernetzanschluss verbunden ist.

4. Einspeiseumschaltung nach einem der Ansprüche 2 oder 3,
**dadurch gekennzeichnet, dass**
der Paketnockenschalter (S1) aus der vierten Schalterstellung zur Schaltung in die dritte Schalterstellung ausgebildet ist und in die vierte Schalterstellung zur Schaltung aus der dritten Schalterstellung ausgebildet ist.

5. Einspeiseumschaltung nach einem der Ansprüche 1 bis 4,
**dadurch gekennzeichnet, dass**
die Steckdose (15') als eine 5-polige 16-A-Steckdose ausgebildet ist und vorzugsweise eine Schutzkappe aufweist.

6. Einspeiseumschaltung nach einem der Ansprüche 1 bis 5,
**dadurch gekennzeichnet, dass**
der Stecker (16') als ein 5-poliger 16-A-Stecker, vorzugsweise als ein Kragenstecker mit Schutzkappe, ausgebildet ist.

7. Einspeiseumschaltung nach einem der vorangehenden Ansprüche,
**dadurch gekennzeichnet, dass**
das elektrische Leitungselement (11') ein 7-poliges Kabel aufweist und die Anschlusseinheit (7') vorzugsweise als ein Aufputz-Gehäuse oder eine Standsäule (8') ausgebildet ist.
